# EUROPÄISCHE PATENTANMELDUNG

(11) **EP 2 661 949 A1**
(43) Veröffentlichungstag der Anmeldung: **13.11.2013**
(21) Anmeldenummer: 12003639.7
(22) Anmeldetag: 09.05.2012
(51) Int. Cl.: A01D 34/835, A01B 49/02, A01B 49/06

(54) **Schneidvorrichtung zur mechanischen Bearbeitung von Ernterückständen zur Verhinderung der Ausbreitung von Pflanzenschädlingen und von Pilzbefall**

(71) Anmelder: IAT-Innovative Agrarmaschinenbau-Technik UG, 35551 Hohenlockstedt (DE)
(72) Erfinder: Saggau, Holger, 25551 Hohenlockstedt (DE)
(74) Vertreter: Hausfeld, Norbert

(57) **Zusammenfassung**

Die Erfindung betrifft eine Schneidvorrichtung (1) zur mechanischen Bearbeitung von Ernterückständen auf einer landwirtschaftlichen Nutzfläche, insbesondere zur Zerkleinerung von Halmgutrückständen wie z.B. von Maisstoppeln, mit einem Tragrahmen (2), der mehrere daran drehbar gelagerte und mit Schneidwerkzeugen (3) besetzte Rotationskörper (4) trägt, die in Arbeitsstellung jeweils auf dem zu bearbeitenden Boden aufliegend und in Vortriebsrichtung (X) auf dem Boden abrollend ausgebildet sind, wobei mehrere Schneidwerkzeuge (3) umfangsbeabstandet so am Rotationskörper (4) angebracht sind, dass sie diesen in radialer Richtung überragen und beim Abrollen des Rotationskörpers (4) in den Boden eindringen, wobei die Schneidwerkzeuge (3) weiterhin ausgebildet sind, in Achsrichtung des Rotationskörpers (4) einen Schnittbereich (5) zu überdecken, wobei jeder der Rotationskörper (4) einzeln höhenbeweglich am Tragrahmen (2) gelagert ist.

## Beschreibung

Die Erfindung betrifft eine Schneidvorrichtung nach Anspruch 1 zur mechanischen Bearbeitung von Ernterückständen auf einer landwirtschaftlichen Nutzfläche und dient dem Ziel, die Ausbreitung von Pflanzenschädlingen und von Pilzbefall zu verhindern, sowie Pflanzenschädlinge und Pilzbefall zu bekämpfen.

Die Größe und die Anzahl der Anbauflächen für Mais als Futtermittel oder als Rohstoff für die Biogasgewinnung sind in den letzten Jahren erheblich gestiegen. Dadurch ist auch der Befall und die Verbreitung von hartnäckigen Schädlingen für die Maispflanze erheblich gestiegen. Der Maiszünsler z.B., der ursprünglich nur im süddeutschen Raum bekannt war, hat sich inzwischen auch bis in den norddeutschen Raum verbreitet. Schädlinge wie der Maiszünsler führen zu einer Gefährdung des Ertrags der Maisanbauflächen. Ein weiteres Problem stellen sogenannte Fusarien dar, die in den Sommermonaten bei feuchter Witterung die Ähren und Halme des Getreides befallen und sich dann im Erntegut wiederfinden. Sie führen zu einer Belastung des Getreides mit Mykotoxinen, die als Stoffwechselprodukte von Schimmelpilzen hochwirksame Giftstoffe darstellen, die schon bei niedriger Konzentration in der menschlichen Nahrung und in Futtermitteln eine Gesundheitsgefährdung für Mensch und Tier darstellen. Schädlinge der genannten Art sind aber nicht nur für Maispflanzen bekannt, sondern auch für andere Getreidearten, wie z.B. auch für Raps oder Weizen. Ohne Beschränkung der Allgemeinheit wird zwar nachfolgend überwiegend auf die Maispflanze und deren Schädlinge eingegangen, die Erfindung betrifft aber in gleicher Weise andere Getreidesorten.

Sowohl die Fusarien als auch die Maiszünsler überwintern auf der Wirtspflanze, d.h. vorwiegend auf dem Maisstoppel, der nach der Ernte im Feld verbleibt. Es ist daher für eine effektive Schädlingsbekämpfung und für eine Vermeidung der weiteren Ausbreitung wichtig, dem Schädling die Überwinterung auf der Wirtspflanze zu erschweren. Hierzu müssen die Ernterückstände möglichst zeitnah nach der Ernte zerkleinert oder so aufgebrochen werden, dass ein Verrottungs- und Verwitterungsprozess der Stoppel so schnell stattfinden kann, dass die Schädlinge beziehungsweise die Fusarien keine Möglichkeit zum Überwintern haben. Im Stand der Technik sind dazu verschiedene Ansätze bekannt.

Neben mechanischen Verfahren zur Bearbeitung von Ernterückständen ist es bekannt, den Maiszünsler mit Insektiziden zu bekämpfen. Hier erweist sich aber als problematisch, dass sich der Maiszünsler nach dem Schlüpfen und noch im frühen Raupenstadium in die Stängel der befallenen Pflanzen frisst. Dort ist die Raupe vor natürlichen Fressfeinden wie z.B. der Schlupfwespe geschützt, aber auch vor Insektiziden. Die Eiablage des Maiszünslers erfolgt in der Regel in den Monaten April/Mai. Von der Eiablage bis zum Einfressen der Raupe vergehen maximal 14 Tage. In diesem engen Zeitfenster müssten die Insektizide ausgebracht werden, um wirken zu können. In diesem Zeitfenster ist der Mais aber kurz vor dem Fahnenschieben und hat bereits eine Wachstumshöhe von etwa 2m erreicht. Es müssen daher für die Schädlingsbekämpfung erhebliche Insektizidmengen und z.B. Hochbein-Feldspritzen eingesetzt werden, was einen erheblichen Zeit- und Geldaufwand bedeutet. Hat sich die Raupe erst in den Stängel eingefressen, ist sie geschützt und kann sich im Stängel weiter nach unten fressen. Befallene Pflanzen sind an abgeknickten Fahnen zu erkennen. Auf dem Weg nach unten müssen die Raupen den Stängel einzig an den Knoten nach außen verlassen, um unterhalb eines Knotens wieder in den Stängel hineinzugelangen. Unterhalb des letzten Knotens bilden sich dann Puppen aus, die dort überwintern und im Frühjahr die nächste Generation von Faltern hervorbringen.

Eine weitere Alternative zur mechanischen Stoppelbearbeitung ist aus der DE 10 2007 043 326 A1 bekannt. Es wird dort im laufenden Ernteverfahren thermische Energie eingesetzt, um die Pflanzenrückstände und die obere Bodenschicht nachzubehandeln. Es werden dazu z.B. heiße oder extrem kalte Gase verwendet oder der Bodenbereich mit elektromagnetischen Wellen beaufschlagt, insbesondere mit Mikrowellen. Ziel dieser thermischen Nachbehandlung ist die Zerstörung der Zellmembran der Schädlinge und der Eiablagen der Schädlinge, so dass diese aussterben. Es muss als nachteilig angesehen werden, dass hierzu ein enormer Energieaufwand notwendig ist und zur Erzielung einer nennenswerten Wirkung erhebliche Einwirkzeiten gewährleistet sein müssen, so dass insgesamt dieses Vorgehen als sehr zeitaufwendig und kaum handhabbar betrachtet wird.

Eine mechanische Vorrichtung zum Zerkleinern von Maisstoppeln zeigt z.B. die DE 10 2010 052 594 A1. Es ist dort vorgesehen, dass pflanzliche Ernterückstände maschinell aus dem Erdboden aufgesammelt und nachfolgend zerhäckselt werden. Nach erfolgter Zerhäckslung werden die zerkleinerten Pflanzenteile wieder auf dem Erdboden verteilt. Es wird als nachteilig angesehen, dass die in der DE 10 2010 052 594 offenbarte Vorrichtung sehr aufwendig ist, keine zuverlässig vollständige Zerkleinerung aller Ernterückstände leisten kann, und dass aufgrund des komplexen mechanischen Ablaufs nur eine geringe Flächenleistung pro Zeit erreichbar ist.

Die DE 10 2004 020 447 A1 offenbart ebenfalls eine mechanische Zerkleinerung von Pflanzenstoppeln, wobei zeitgleich mit dem Ernteprozess durch eine an der Erntemaschine angeordnete Zerschneideinrichtung die Pflanzenstoppeln bis auf circa 5cm Länge herabgekürzt werden. Eine vollständige Zerkleinerung der Stoppeln kann nicht erreicht werden, so dass zu erwarten ist, dass zumindest teilweise Larven und Fusarien in den verbliebenen verkürzten Stoppeln überwintern können.

Es ist auch bekannt, die Maisstoppeln einfach unterzupflügen. Dadurch wird aber eine Verrottung der Stoppeln gerade verhindert, da kein Sauerstoff mehr an die Stoppeln gelangt. Das Unterpflügen gelingt nur teilweise, das heißt ein Teil der stoppeln wird weiterhin auf der Ackeroberfläche verbleiben. Zum anderen wird bei späteren Feldbestellungsschritten ein Teil der untergepflügten Stoppel wieder freigelegt.

Es ist aus dem Stand der Technik auch bekannt, Maisstoppeln mit Häckslern zu bearbeiten. Als problematisch stellt sich hierbei dar, dass diese Häcksler umgeknickte oder in den Boden eingedrückte Halmgutreste nicht erfassen können. Ein nicht unerheblicher Teil der Halmgutreste wird also von solchen Häckslern nicht erfasst. Dies ist ein bekanntes Problem, und in der DE 10 2010 012 686 A1 wird daher eine Vorrichtung zum Aufrichten von Halmgutresten vorgestellt, um dann nachfolgend mit einem Häcksler die aufgerichteten Halmgutreste zerkleinern zu können. Es wird als nachteilig angesehen, dass durch diese Vorrichtung ein zusätzliches Arbeitsgerät und ein zusätzlicher Arbeitsschritt erforderlich ist.

Es ist auch bekannt, arbeits- und kostenaufwendige Mulcher einzusetzen. Es sind auch mit Schneidwerkzeugen besetzte Walzen bekannt, wie z.B. die Scheidwalze Dal-Bo MaxiCut 600. Solche Walzen lassen allerdings weite Teile der Ackerfläche unbearbeitet, da diese eine unebene Oberfläche sowie Fahrspuren aufweisen. Walzen können die tieferliegenden, z.B. in Fahrspurrillen befindlichen Stoppeln nicht erreichen. Weiterhin haben diese Walzen das Problem, dass sie verkleben und eine unzufriedenstellende Flächenleistung pro Zeit erreichen.

Es ist daher die Aufgabe der vorliegenden Erfindung, eine Vorrichtung zum Zerkleinern von z.B. Maisstoppeln bereitzustellen, die eine hohe Flächenleistung bei möglichst vollständiger Erfassung aller Halmrückstände gewährleistet. Diese Aufgabe wird mit der erfindungsgemäßen Vorrichtung erreicht. Weitere vorteilhafte Ausgestaltungen sind Gegenstand der Unteransprüche.

Erfindungsgemäß besteht die Schneidvorrichtung aus einem Tragrahmen und mehreren daran drehbar gelagerten und mit Schneidwerkzeugen besetzten Rotationskörpern, wobei jeder der Rotationskörper einzeln höhenbeweglich am Tragrahmen gelagert ist. Es ist dabei vorgesehen, dass die Rotationskörper auf dem Boden aufliegen und abrollen. Beim Abrollen dringen die umfangsbeabstandet auf dem Rotationskörper und diesen radial überragenden Schneidwerkzeuge in den Boden ein. Die in den Boden eindringenden Messer zerschneiden, zerquetschen, zerfasern dabei im Wirkbereich der Messer befindliche Maisstoppel, so dass eine zügige Verrottung stattfinden kann. Jeder der Rotationskörper ist höhenbeweglich gelagert, so dass er dem Höhenprofil des Bodens folgen kann, und z.B. auch in Fahrspuren eintaucht. Die Schnittbreite kann z.B. mit 25 cm gewählt werden, und sollte kleiner als z.B. typische Fahrspurbreiten sein. Wenn man eine sehr kleine Schnittbreite wählt, werden viele Rotationskörper benötigt, um eine zufriedenstellende Arbeitsbreite zu erhalten. Für eine gute Flächenleistung pro Zeit sollte die Arbeitsbreite wenigstens 3 m betragen, besser deutlich mehr. Da die Rotationskörper lediglich auf dem Boden abrollen, können auch deutlich größere Arbeitsbreiten von z.B. 8 m gewählt werden und dennoch von üblichen Traktoren mit üblicher Motorisierung bewegt werden. Es lassen sich trotzdem hohe Arbeitsgeschwindigkeiten von 20 km/h erreichen. Diese hohe Arbeitsgeschwindigkeit ist auch für die Schneidwirkung der Schneidmesser vorteilhaft

Mit Vorteil weist die Schneidvorrichtung mehrere Reihen von mit Schneidwerkzeugen besetzten Rotationskörpern auf, wobei die Rotationskörper benachbarter Reihen zueinander versetzt auf Lücke angeordnet sind. Die Schneidmesser der hinteren Reihen bearbeiten gewissermaßen die Bereiche zwischen den Schneidmessern der vorderen Reihe, wobei bevorzugt eine Überlappung der überstrichenen Schnittbereiche in deren Randbereichen vorgesehen ist. Es ist dadurch sichergestellt, dass über die gesamte Arbeitsbreite der Schneidvorrichtung zuverlässig jeder Bodenbereich bearbeitet wird.

Mit Vorteil unterstützt ein Federelement die Bodeniveaufolgebewegung des Rotationskörpers, indem eine auf den Boden gerichtete Kraft auf den Rotationskörper einwirkt. Solche Federelemente sind im Stand der Technik bekannt. Sie führen zudem dazu, dass die Rotationskörper ruhiger auf dem Boden abrollen.

Die Schneidvorrichtung könnte z.B. selbstfahrend ausgebildet werden. Bevorzugt ist aber an der Vorrichtung eine Kupplungseinrichtung vorgesehen, um z.B. an einen üblichen Traktor angekoppelt zu werden.

Eine Verbesserung der Zerkleinerungswirkung wird dadurch erreicht, dass die Schneidwerkzeuge schräg zur Abrollrichtung des Rotationskörpers stehend angeordnet sind. Das Messer dringt dadurch nicht gleichzeitig über die gesamte Messerbreite in den Boden ein, sondern zunächst mit dem in Abrollrichtung vorne stehenden Ende, und dann sukzessive entlang der gesamten Breite, so dass eine schneidende Eindringbewegung mit besserer Einwirkung auf die Maisstoppel entsteht.

Dabei ist bevorzugt, dass bei den in Abrollrichtung versetzt hintereinander liegenden Rotationskörpern die Schrägstellung der Schneidwerkzeuge gegensinnig ist, so dass sich die Schnittmuster gewissermaßen kreuzen. Sind die Schneidwerkzeuge der ersten Reihe z.B. um 45° schräg gestellt, so sind es die der zweiten Reihe z.B. um - 45°. Es ist dadurch ausgeschlossen, dass zufällig zwischen die schräg gestellten Schneidwerkzeuge passende Stoppeln, nämlich solche, die ebenfalls schräg stehen, von allen Rotationskörperreihen unbearbeitet bleiben. In der Regel wird jeder Maisstoppel durch diese Maßnahme sogar mehrfach erfasst.

Mit Vorteil wird der Umfangsabstand zwischen umfangsbenachbarten Schneidwerkzeugen, die Schrägstellung der Schneidwerkzeuge und die Länge der Schneidwerkzeuge so gewählt ist, dass die Projektionen umfangsbenachbarter Schneidwerkzeuge in Achsrichtung des Rotationskörpers aneinanderstoßen oder sich überlappen. In dem Moment, in dem ein Schneidwerkzeug den Boden verläßt dringt das in Umfangsrichtung dahinter angeordnete Schneidwerkzeug in den Boden ein. Zu jedem Zeitpunkt der Abrollbewegung ist ein Schneidwerkzeug in Eingriff mit dem Boden, sodass immer eine relativ gleichmäßige Schneidkraft gegeben ist.

Die Schneidwerkzeuge werden einem gewissen Verschleiß ausgesetzt sein. Es kann auch zu Beschädigungen z.B. durch Steine im Boden kommen. Es ist deshalb von Vorteil, wenn die Schneidwerkzeuge auswechselbar am Rotationskörper befestigt sind. Schadhafte Schneidwerkzeuge lassen sich so austauschen, ohne dass der Rotationskörper insgesamt auszutauschen wäre.

Um den Acker nicht brach liegen zu lassen, wird zunehmend eine Zwischenbegrünung der abgeernteten Flächen verlangt, z.B. um Bodenkorrosion zu vermeiden. Daher weist die Schneidvorrichtung eine Saatgerät auf, um im gleichen Arbeitsgang Saatgut auszutragen.

Für den Transport der Schneidvorrichtung von und zum Einsatzort ist es von Vorteil, wenn die Rotationskörper aus einer bodennahen Arbeitsstellung in eine angehobene Transportstellung bewegbar sind. Dies kann z.B. über einen hydraulischen Höhen- oder Schwenkantrieb der Rotationskörper erfolgen. Sie können aber auch manuell angehoben und dann arretiert werden. Weitere Möglichkeiten sind aus dem Stand der Technik bekannt.

Die Breite der Schneidvorrichtung muss einen Transport auf öffentlichen Verkehrswegen noch erlauben. Gleichzeitig ist eine große Arbeitsbreite für eine große Flächenleistung gewünscht. Es ist daher von Vorteil, wenn der Tragrahmen aus mehreren nebeneinander liegenden und gelenkig miteinander verbundenen Teilrahmen besteht, wobei die außen liegenden Teilrahmen aus einer horizontalen Arbeitsstellung in eine im Wesentlichen vertikale Transportstellung schwenkbar sind. Es lassen sich dadurch zulässige Transportbreiten einhalten, gleichzeitig aber die gewünschten großen Arbeitsbreiten erreichen.

Für den An- und Abtransport der Vorrichtung sind mit Vorteil am Tragrahmen Räder angeordnet. Auf dem Acker sind die Räder in Ruhestellung, lassen sich aber für den Transport in eine Arbeitstellung bringen, wo sie dann den Boden berühren. Das Ausfahren der Räder kann z.B. hydraulisch oder durch handbetätigte Mechaniken erfolgen. Das Ausfahren der Räder kann z.B. bewirken, dass der Rahmen dabei so angehoben wird, dass die Schneidwerkzeuge einen Abstand zum Boden erhalten; die Rotationskörper gelangen also dadurch automatisch in eine angehobene Transportstellung.

Die Rotationskörper können eine weitgehend beliebige Ausgestaltung haben. Sie müssen lediglich die Schneidmesser tragen und auf dem Boden abrollen. Bevorzugt sind sie aber als schmale zylindrische Scheibenräder ausgebildet, und die Schneidwerkzeuge überragen die Scheibenräder zu beiden Seiten in Achsrichtung.

Auch die Befestigung der Schneidwerkzeuge kann im Grundsatz beliebig erfolgen, z.B. an den Seitenflächen der Rotationskörper. Bevorzugt sind sie aber am Außenumfang der Rotationskörper befestigt, z.B. sind sie dort angeschweißt oder in dort vorgesehenen Aufnahmen verschraubt oder eingeklemmt.

Insbesondere bei schmalen Rotationskörpern und bei leichtem Boden können die Rotationskörper in den Boden einsinken. Mit Vorteil ist daher am Tragrahmen eine Abstützeinrichtung angeordnet, die in Arbeitsstellung auf dem Boden aufliegt und die Eindringtiefe der Schneidwerkzeuge begrenzt. Eine solche Abstützeinrichtung kann z.B. eine über den Boden gleitende Kufe sein.

Der sich drehende Rotationskörper und die in den Boden eindringenden und wieder austretenden Schneidmesser führen zu einer Bodenauflockerung und es werden erhebliche Erdmengen aufgeworfen. Es ist daher von Vorteil, eine Walzeinrichtung in Abrollrichtung hinter den Rotationskörpern an der Schneidvorrichtung anzuordnen, die den aufgelockerten Boden wieder verdichtet. Weiterhin ist von Vorteil, wenn die Walzeinrichtung die Abstützeinrichtung bildet.

Nachfolgend wird die Erfindung anhand eines Ausführungsbeispiels näher beschrieben. Es zeigen in stark vereinfachter und prinzipienhafter Darstellung:
- Fig. 1: eine Seitenansicht auf ein Ausführungsbeispiel einer erfindungsgemäßen Vorrichtung, und
- Fig. 2: eine Ansicht von oben auf ein Ausführungsbeispiel einer erfindungsgemäßen Vorrichtung.

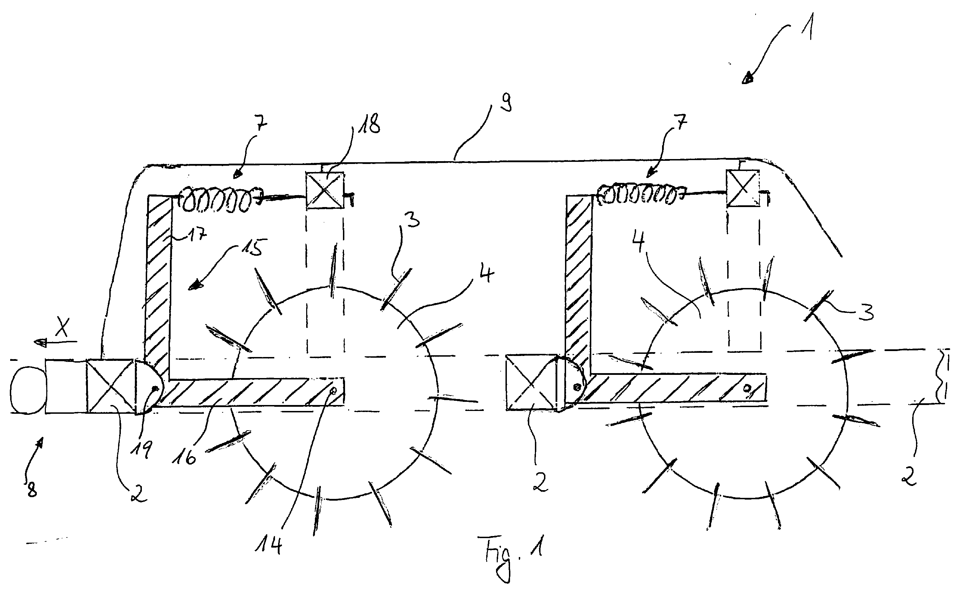

Die Fig. 1 zeigt in einer Seitenansicht eine erfindungsgemäße Bodenbearbeitungsvorrichtung 1 mit zwei in Abrollrichtung X hintereinander angeordneten Schneidrädern 4, die jeweils drehbar vom Tragrahmen 2 der Vorrichtung 1 gehalten sind. Im gezeigten Ausführungsbeispiel ist die Vorrichtung 1 nicht selbstfahrend ausgebildet, sondern kann mit dem Kupplungselement 8 an ein typisches Kupplungsstück eines nicht dargestellten landwirtschaftlichen Fahrzeuges angekoppelt werden.

Die Schneidräder 4 tragen auf ihrer Umfangsfläche diese Umfangsfläche überragende Schneidmesser 3. Im gezeigten Ausführungsbeispiel sind die Schneidmesser 3 in die Umfangsfläche eingelassene Stahlbleche mit geschärfter Kante und z. B. durch Verschweißen am Außenumfang des Schneidrades befestigt. Sie könnten aber z. B. dort auch angeschraubt oder eingeklemmt sein, um bei Abnutzung ausgetauscht zu werden.

Die Vorrichtung 1 weist weiterhin ein Dachelement 9 auf. Dieses Dachelement 9 erstreckt sich über alle Schneidräder hinweg und hat im Wesentlichen die Aufgabe, den von den im Betrieb drehenden Schneidmessern 3 aufgeworfenen Erdboden abzufangen, damit dieser nicht unkontrolliert aufgewirbelt wird.

Die Schneidräder 4 sind mit ihren Drehachsen 14 in einem L-förmigen Trägerarm 15 drehgelagert. Dieser L-förmige Trägerarm 15 wiederum ist schwenkbar am Hauptrahmen 2 gelagert, wobei ein Schenkel 16 des L-förmigen Trägerarmes 15 im Wesentlichen horizontal verläuft, während der zweite Schenkel 17 im Wesentlichen vertikal verläuft. An diesem vertikalen Schenkel 17 ist eine Feder 7 zwischen dem freien Schenkelende und einem Stabilisierungsholm 18 befestigt. Diese Feder 7 übt eine Zugkraft auf den vertikal stehenden Schenkel 17 in Richtung auf den Stabilisierungsholm 18 aus, so dass nach Umlenkung am Anlenkpunkt 19 das Schneidrad 4 in Richtung auf den Boden angepresst wird. Diese Anpresskraft addiert sich zur Gewichtskraft des Schneidrades 4 und verbessert das Anliegen des Schneidrades 4 am Boden, insbesondere wenn das Schneidrad 4 über Senken oder Erhebungen hinwegläuft. Das Schneidrad 4 ist auf diese Weise besser in der Lage, Bodenunebenheiten zu folgen.

In der Ansicht von oben ist erkennbar, dass in einer ersten, in Abrollrichtung X vorne liegenden Reihe z. B. sechs Schneidräder 4 angeordnet sind. Diese Räder 4 können z. B. Scheibenräder mit einem Scheibendurchmesser z. B. von ca. 50 cm sein, wobei die Scheibendicke z. B. zwischen 10 und 20 mm betragen kann. Auf dem Außenumfang dieser Scheibe sind schrägstehend Schneidmesser 3 angeordnet, die äquidistant am Scheibenumfang verteilt sind. Zum Beispiel können bei einem Scheibendurchmesser von 50 cm zwölf Messer 3 vorgesehen sein. Eine größere Anzahl an Messern 3 führt zwar zu einer stärkeren Zerkleinerung der Maisstoppel, könnte aber bei bestimmten Bodenbedingungen zu einer erheblichen Verklebung des Schneidrades 4 führen. Ein Zusetzen des Schneidrades 4 ist aber u. a. dadurch weitgehend verhindert, dass das Scheibenrad eine relativ geringe Dicke aufweist und beidseitige von den schrägstehenden Messern 3 überragt wird. An den Messern 3 anhaftender Boden wird beim nächsten Umlauf durch nachdrückenden Boden radial nach innen in Richtung auf die Drehachse 14 verdrängt und abgeworfen. Zusätzlich könnte zur Verbesserung des Ablösend des Bodens auch noch ein Abstreifer vorgesehen werden. Ein weiterer positiver Effekt ist, dass die vorliegende Vorrichtung 1 mit relativ hoher Vortriebsgeschwindigkeit gefahren werden kann, so dass aufgrund der sich dann einstellenden Umfangsgeschwindigkeiten an den Schneidrädern 4 anhaftendes Erdreich weggeschleudert wird. Die Schneidräder 4 reinigen sich selbsttätig.

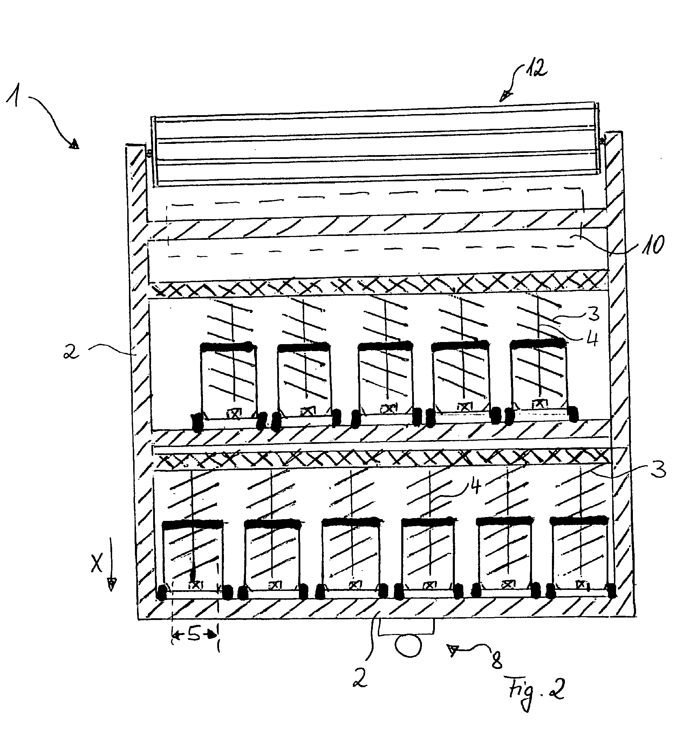

Wie der Fig. 2 weiterhin zu entnehmen ist, weist die Vorrichtung 1 eine zweite Reihe von Schneidrädern 4 auf, die versetzt zu den Schneidrädern 4 der ersten Reihe angeordnet sind. Die Schneidräder 4 der zweiten Reihe weisen Schneidmesser 3 auf, die entgegengesetzt zu den Schneidmessern 3 der ersten Reihe schräg auf den Scheibenrädern 4 angeordnet sind. Weiterhin sind die Schneidräder 4 der zweiten Reihe in den Lücken zwischen den Schneidrädern 4 der ersten Reihe angeordnet, wobei dafür Sorge getragen worden ist, dass die Schnittbereiche 5 der Schneidmesser 3 der zweiten Reihe sich teilweise mit den Schnittbereichen 5 der Messer 3 der ersten Reihe überdecken. Auf diese Weise ist sichergestellt, dass keine Maisstoppel unbearbeitet bleiben. Auch das entgegengesetzte Schrägstellen der Schneidmesser 3 der zweiten Reihe im Verhältnis zu den Messern 3 der ersten Reihe sorgt dafür, dass möglichst alle Maisstoppel erfasst und Maisstoppel zerschnitten, zerfasert oder zerdrückt Maisstoppel zerschnitten, zerfasert oder zerdrückt werden, um nachfolgend den Verrottungsprozess eintreten zu lassen.

An ihrem hinteren Ende weist die Vorrichtung 1 eine Walze 12 auf, die zum einen die Vorrichtung 1 am Boden abstützt, damit z. B. die Scheibenräder 4 nicht zu tief in sehr weiches Erdreich eindringen. Zum anderen sorgt diese Walze 12 dafür, dass der durch die Einwirkung der Scheibenräder 4 und der Schneidmesser 3 aufgelockerte Boden zumindest teilweise wieder eingeebnet und verfestigt wird. Zwischen den Schneidrädern 4 und der Walze 12 kann z. B. noch eine Saatvorrichtung 10 eingefügt werden, die in der Darstellung der Fig. 2 als Strichlinie angedeutet ist. Über diese Saatvorrichtung 10 kann z. B. Saatmittel ausgebracht werden für eine Zwischenbegrünung der ansonsten brachliegenden Ackerfläche.

## Patentansprüche

1. Schneidvorrichtung (1) zur mechanischen Bearbeitung von Ernterückständen auf einer landwirtschaftlichen Nutzfläche, insbesondere zur Zerkleinerung von Halmgutrückständen wie z.B. von Maisstoppeln, mit einem Tragrahmen (2), der mehrere daran drehbar gelagerte und mit Schneidwerkzeugen (3) besetzte Rotationskörper (4) trägt, die in Arbeitsstellung jeweils auf dem zu bearbeitenden Boden aufliegend und in Abrollrichtung (X) auf dem Boden abrollend ausgebildet sind, wobei mehrere Schneidwerkzeuge (3) umfangsbeabstandet so am Rotationskörper (4) angebracht sind, dass sie diesen in radialer Richtung überragen und beim Abrollen des Rotationskörpers (4) in den Boden eindringen, wobei die Schneidwerkzeuge (3) weiterhin ausgebildet sind, in Achsrichtung des Rotationskörpers (4) einen Schnittbereich (5) zu überdecken, wobei jeder der Rotationskörper (4) einzeln höhenbeweglich am Tragrahmen (2) gelagert ist.

2. Schneidvorrichtung (1) nach Anspruch 1, **dadurch gekennzeichnet, dass** die Schneidvorrichtung (1) mehrere Reihen von mit Schneidwerkzeugen (3) besetzten Rotationskörpern (4) aufweist, wobei die Rotationskörper (4) benachbarter Reihen zueinander versetzt auf Lücke angeordnet sind, wobei bevorzugt eine Überlappung der von den Schneidwerkzeugen (3) überstrichenen Schnittbereiche (5) vorgesehen ist.

3. Schneidvorrichtung (1) nach Anspruch 1 oder 2, **dadurch gekennzeichnet, dass** Federelemente (7) an der Schneidvorrichtung (1) angeordnet sind, die die Rotationskörper (4) mit einer auf den Boden gerichteten Kraft beaufschlagen.

4. Schneidvorrichtung (1) nach einem der vorhergehenden Ansprüche, **dadurch gekennzeichnet, dass** der Tragrahmen (2) eine Kupplungseinrichtung (8) aufweist zur Ankupplung an ein Zugfahrzeug.

5. Schneidvorrichtung (1) nach einem der vorhergehenden Ansprüche, **dadurch gekennzeichnet, dass** die Schneidwerkzeuge (3) schräg zur Abrollrichtung (X) des Rotationskörpers (4) stehend angeordnet sind.

6. Schneidvorrichtung (1) nach Anspruch 2 und 5, **dadurch gekennzeichnet, dass** bei den in Abrollrichtung (X) versetzt hintereinander liegenden Rotationskörpern (4) die Schrägstellung der Schneidwerkzeuge (3) gegensinnig ausgebildet ist.

7. Schneivorrichtung (1) einem der Ansprüche 5 oder 6, **dadurch gekennzeichnet, dass** der Umfangsabstand zwischen umfangsbenachbarten Schneidwerkzeugen (3), die Schrägstellung der Schneidwerkzeuge (3) und die Länge der Schneidwerkzeuge (3) so gewählt ist, dass die Projektionen umfangsbenachbarter Schneidwerkzeuge (3) in Achsrichtung des Rotationskörpers (4) aneinanderstoßen oder sich überlappen.

8. Schneidvorrichtung (1) nach einem der vorhergehenden Ansprüche, **dadurch gekennzeichnet, dass** die Schneidwerkzeuge (3) auswechselbar am Rotationskörper (4) befestigt sind.

9. Schneidvorrichtung (1) nach einem der vorhergehenden Ansprüche, **dadurch gekennzeichnet, dass** sie eine Saateinrichtung (10) aufweist zur Austragung von Nachsaatgut.

10. Schneidvorrichtung (1) nach einem der vorhergehenden Ansprüche, **dadurch gekennzeichnet, dass** die Schneidwerkzeuge (3) aufweisenden Rotationskörper (4) aus einer bodennahen Arbeitsstellung in eine angehobene Transportstellung bewegbar sind.

11. Schneidvorrichtung (1) nach einem der vorhergehenden Ansprüche, **dadurch gekennzeichnet, dass** der Tragrahmen (2) aus mehreren nebeneinander liegenden und gelenkig miteinander verbundenen Teilrahmen besteht, wobei die außen liegenden Teilrahmen aus einer horizontalen Arbeitsstellung in eine im wesentlichen vertikale Transportstellung schwenkbar sind.

12. Schneidvorrichtung (1) nach einem der vorhergehenden Ansprüche, **dadurch gekennzeichnet, dass** am Tragrahmen (2) Räder angeordnet sind für das Bewegen der Schneidvorrichtung (1) auf öffentlichen Verkehrswegen, wobei die Räder aus einer Arbeitsstellung, bei der die Räder in Kontakt mit dem Boden gelangen, in eine Ruhestellung bewegbar sind, bei der die Räder keinen Kontakt mit dem Boden haben.

13. Schneidvorrichtung (1) nach einem der vorhergehenden Ansprüche, **dadurch gekennzeichnet, dass** die Rotationskörper (4) als schmale Scheibenräder ausgebildet sind, und die Schneidwerkzeuge (3) die Scheibenräder zu beiden Seiten in Achsrichtung überragen.

14. Schneidvorrichtung (1) nach einem der vorhergehenden Ansprüche, **dadurch gekennzeichnet, dass** die Schneidwerkzeuge (3) am Außenumfang der Rotationskörper (4) befestigt sind.

15. Schneidvorrichtung (1) nach einem der vorhergehenden Ansprüche, **dadurch gekennzeichnet, dass** am Tragrahmen (2) eine Abstützeinrichtung (12) angeordnet ist, die so ausgebildet ist, dass sie in Arbeitsstellung auf dem Boden aufliegt und die Eindringtiefe der Schneidwerkzeuge (3) begrenzt.

16. Schneidvorrichtung (1) nach einem der vorhergehenden Ansprüche, **dadurch gekennzeichnet, dass** eine Walzeinrichtung in Abrollrichtung (X) hinter den Rotationskörpern (4) an der Schneidvorrichtung (1) angeordnet ist.

17. Schneidvorrichtung (1) nach den Ansprüchen 15 und 16, **dadurch gekennzeichnet, dass** die Walzeinrichtung die Abstützeinrichtung (12) bildet.
